Europäisches Patentamt

European Patent Office

Office européen des brevets

(19)

(11) Numéro de publication : **0 508 916 A1**

# (12) DEMANDE DE BREVET EUROPEEN

(21) Numéro de dépôt : **92420115.5**

(22) Date de dépôt : **08.04.92**

(51) Int. Cl.⁵ : **A01D 46/28**

(30) Priorité : **11.04.91 FR 9104954**

(43) Date de publication de la demande :
**14.10.92 Bulletin 92/42**

(84) Etats contractants désignés :
**AT DE ES FR IT PT**

(71) Demandeur : **SA ARNAUD FRERES**
**Zone Industrielle du Bois des Lots**
**F-26130 Saint Paul Trois Châteaux (Drôme)**
**(FR)**

(72) Inventeur : **Arnaud, Didier**
**Zone industrielle**
**F-26130 Saint Paul Trois Chateaux, Drôme**
**(FR)**

(74) Mandataire : **Perrier, Jean-Pierre et al**
**Cabinet GERMAIN & MAUREAU 12 rue de la**
**République**
**F-42000 St-Etienne (FR)**

(54) **Dispositif de collecte et de convoyage de baies et fruits dans une machine de récolte.**

(57)    Ce dispositif de collecte et de convoyage est composé de godets articulés sur une chaîne motorisée décrivant une trajectoire fermée comprenant une branche inférieure pour la collecte et la séparation, une branche supérieure pour le transfert au bac et au moins une branche intermédiaire assurant le convoyage de la récolte.

Selon l'invention, chacun des godets est muni d'une fente transversale (20) qui, séparant sa paroi amont d'une traverse (18), est traversée par une paroi continue de guidage (14) composée par des tronçons de paroi (14a-14f), comportant, d'amont en aval, dans la zone inférieure de collecte, un tronçon plan et fermé (14a), dans la zone de séparation par aspiration, un tronçon (14b) traversé par des lumières longitudinales oblongues (28), dans la zone suivante de remplissage des godets par leur propre traverse (18), un tronçon de paroi (14c) traversé par une ouverture longitudinale (29), de longueur au moins égale à la longueur d'un godet (12), dans la zone intermédiaire de convoyage, un tronçon de paroi (14d) obturant les ouvertures des godets (12), dans la zone supérieure du transfert, un tronçon de paroi (14e) traversé par une ouverture longitudinale (30) débouchant immédiatement au-dessus d'un plan incliné, et enfin un tronçon de raccordement (14f) s'étendant de la zone de transfert à la zone de collecte.

FIG.2

EP 0 508 916 A1

L'invention est relative aux machines, tractées ou motorisées, utilisées pour la récolte de fruits et baies diverses comportant un portique muni de roues, aptes à enjamber une rangée de végétaux porteur de baies ou de fruits et portant des moyens aptes à secouer transversalement les végétaux pour en détacher les fruits ou baies, au moins un plan de réception recevant la récolte et la dirigeant vers des moyens de collecte, des moyens de séparation par aspiration des feuilles et autres déchets mélangés à la récolte et enfin des moyens de convoyage conduisant la récolte vers un bac de stockage.

Le plus souvent, les moyens de réception, de collecte, de séparation et de convoyage de la récolte sont composés de deux séries identiques disposées de part et d'autre du plan médian vertical et longitudinal de la machine.

Dans la plupart des machines actuelles, les baies ou fruits quittant par gravité le plan de réception sont déversés dans un canal muni de moyens déplaçant la récolte en direction d'un déversoir. Durant son déplacement, la récolte passe sous une bouche d'aspiration dont le but est de prélever les feuilles, débris de branches et autres déchets récoltés en même temps que les baies ou fruits.

Dans le cas d'une machine à vendanger le raisin, la récolte est composée de grappes mais aussi de baies séparées de leurs grappes qui laissent échapper d'autant plus de jus de raisin qu'elles ne sont pas complètement mûres, qu'elles ont éclaté au moment de leur contact avec le plan de réception ou ont été écrasées par les moyens assurant leur déplacement dans le canal. Ce jus ou moût souille les feuilles et déchets et permettent à ceux-ci d'adhérer aux baies et grappes.

Il en résulte que, pour éliminer ces déchets, il est nécessaire soit de multiplier les zones d'aspiration, soit d'augmenter la puissance d'aspiration.

Indépendamment de l'augmentation du coût de la machine, cette disposition présente aussi l'inconvénient d'entraîner une réduction du rendement de la vendange. En effet, l'augmentation de la puissance ou du nombre de zones d'aspiration favorise également l'entraînement par aspiration du jus ou moût au détriment de la récolte des baies et grappes.

On connaît par FR-A 2 555 401 et US 4 944 387 des machines à vendanger dont le châssis portique est muni de moyens de collecte et de convoyage constitués par des godets qui, formant un chapelet continu et articulés transversalement sur une chaîne décrivant une trajectoire fermée dans le plan vertical, ont leurs ouvertures tournées vers le centre de la trajectoire, et coopèrent avec des moyens de guidage organisant leur position dans l'espace

Dans ces machines, les baies et grappes porteuses de baies tombent pêle-mêle dans chaque godet et perturbent l'aspiration ultérieure des feuilles et déchets.

L'un des objets de l'invention est de fournir un dispositif de collecte et de convoyage qui remédie à ces inconvénients, c'est à dire permette d'obtenir une récolte débarrassée de toutes feuilles et déchets, sans perte de moût ni augmentation de la puissance d'aspiration.

Un autre inconvénient des machines de récolte actuelles vient de leur faculté à séparer les baies des grappes et à détériorer les baies et cela en raison des moyens utilisés pour convoyer la récolte entre le plan de réception et le bac de stockage correspondant. En effet, l'effort mécanique de poussée de la récolte dans le canal, sur une distance égale à la longueur ou au double de la longueur de ce canal favorise l'éclatement, le cisaillement et voire même l'écrasement des baies.

Par ailleurs, dans la plupart de ces machines, l'extrémité du canal de collecte est munie d'un déversoir dirigeant les baies vers des moyens d'élévation, de type godets ou augets les élevant verticalement jusqu'à une zone de déchargement où elles sont déversées par gravité sur un plan incliné ou une goulotte les conduisant vers un bac de stockage porté par la machine. Durant ces déplacements et transferts mettant plusieurs fois en oeuvre la gravité, les baies sont soumises à des chocs répétés favorisant aussi leur éclatement ou leur écrasement.

Il en résulte que la récolte réceptionnée dans le bac de stockage comporte une proportion importante de baies éclatées et de moût libre favorisant le début de l'oxydation de la récolte et ayant des effets néfastes sur sa conservation, et sur la suite de la vinification dans le cas de raisins.

Un autre objet de l'invention est de fournir un dispositif de collecte et de convoyage de la récolte permettant d'obtenir, le plus possible, d'une part, des baies non éclatées, non écrasées ou non cisaillées, et d'autre part, des grappes entières, avec des baies entières et non choquées.

Le dispositif selon l'invention concerne plus particulièrement les machines de récolte dans lesquelles les moyens de collecte et de convoyage sont constitués par des godets portés par une chaîne motorisée décrivant une trajectoire fermée comprenant une branche inférieure pour la collecte et la séparation, une branche supérieure pour le transfert au bac et au moins une branche intermédiaire assurant le convoyage de la récolte.

Selon l'invention, chacun des godets est muni d'une fente transversale qui, séparant sa paroi amont d'une traverse, est traversée par une paroi continue de guidage composée par des tronçons de paroi, sensiblement parallèles à la trajectoire des articulations des godets, disposés à l'intérieur de cette trajectoire, s'insérant transversalement entre les parois longitudinales de chaque godet et comportant, d'amont en aval, dans la zone inférieure de collecte, un tronçon plan et fermé, dans la zone de séparation par aspiration, un tronçon traversé par des lumières longitudinales oblongues, dans la zone suivante de remplissage des godets par leur propre traverse, un tronçon de paroi traversé par une ouverture longitudinale, de longueur au moins égale à la longueur d'un godet, dans la zone intermédiaire de convoyage, un tronçon de paroi obturant les ouvertures des godets, dans la zone supérieure du transfert, un tronçon de paroi traversé par une ouverture longitudinale débouchant immédiatement au-dessus d'un plan incliné, et enfin un tronçon de raccordement s'étendant de la zone de transfert à la zone de collecte.

Avec ce dispositif, les baies et fruits tombant sur le plan de réception sont dirigés par celui-ci vers les moyens de collecte et de convoyage et, plus précisément, sur le tronçon de paroi plane obturant les godets, se déplaçant en sens inverse du déplacement de la machine de récolte au-dessus de la végétation.

Les baies et fruits, tombant d'une faible hauteur sur cette paroi, s'étalent sur celle-ci avant d'être poussés par les traverses des godets jusqu'à la zone de séparation par aspiration. A cet endroit, les lumières oblongues permettent aux baies, séparées des grappes, de tomber directement dans les godets, sans gêner le prélèvement par aspiration des feuilles et autres déchets. Il faut ici noter que, grâce à la faible hauteur de chute des baies et fruits sur le convoyeur et aux moyens utilisés pour les répartir et les déplacer, les baies sont peu écrasées et qu'il existe beaucoup moins de jus susceptible de retenir les feuilles et déchets, ce qui permet de réduire la puissance de l'installation de ventilation, tout en obtenant une excellente séparation.

Dans la phase suivante, toujours poussés par les traverses des godets, les plus gros éléments de la récolte, et par exemple les grappes de raisins, tombent d'elles-mêmes dans le godet sous-jacent, en passant à travers le tronçon de paroi comportant une grande ouverture longitudinale. A partir de là, et suivant en cela la trajectoire imposée par la chaîne d'entraînement, les godets décrivent une trajectoire sensiblement verticale pendant laquelle l'ouverture est totalement obturée par un tronçon de paroi plane, évitant tous mouvements de la récolte. Lorsque chaque godet arrive à son point maximal et pivote pour reprendre une trajectoire sensiblement verticale, les baies et fruits qu'il contient tombent doucement sur le tronçon de paroi supérieure obturant son ouverture, sans risque de détérioration. Enfin, dans la zone supérieure de transfert, et lorsque chaque godet vient juste au-dessus du tronçon de paroi traversée par une ouverture longitudinale, la totalité de son contenu tombe, par gravité et sur une faible hauteur, sur le plan incliné disposé immédiatement au-dessous, ce qui évite encore que la récolte soit écrasée.

Il ressort de ce qui précède que le dispositif de collecte et de convoyage selon l'invention permet, depuis le plan de réception de la récolte jusqu'à la zone de transfert vers le bac de stockage, de déplacer la récolte par petite quantité, insuffisante pour détériorer le contenu de la récolte, en évitant au maximum les chutes de grande hauteur pouvant faire éclater les baies et en déplaçant la récolte par des moyens respectant sa fragilité.

Grâce à cela, non seulement, la récolte est propre, mais elle comprend de nombreuses baies non éclatées et grappes non choquées, et est donc très voisine de la récolte obtenue par ramassage manuel, ce qui améliore le processus ultérieur de vinification.

D'autres caractéristiques et avantages ressortiront de la description qui suit en référence au dessin schématique annexé, représentant à titre d'exemple non limitatif, une forme d'exécution de ce dispositif de collecte et de convoyage dans le cas de son application à une machine à vendanger.

Figure 1 est une vue en coupe transversale présentant schématiquement la structure générale d'une machine à vendanger,

Figure 2 est une vue partielle montrant, de côté et en perspective, le dispositif de collecte et de convoyage,

Figure 3 est une vue en perspective montrant, à échelle agrandie, l'un des godets,

Figures 4 et 5 sont des vues partielles, de côté, en coupe et à échelle agrandie, montrant le poste de déchargement, respectivement, lors de la mise en place d'un bac de stockage et en position de déversement,

Figure 6 est une vue de côté partielle en coupe transversale similaire aux figures 4 et 5, mais montrant le poste de déchargement par l'autre côté du plan incliné,

Figures 7 et 8 sont des vues de côté en coupe longitudinale d'un godet montrant ses possibilités d'évolution par rapport à sa paroi de guidage.

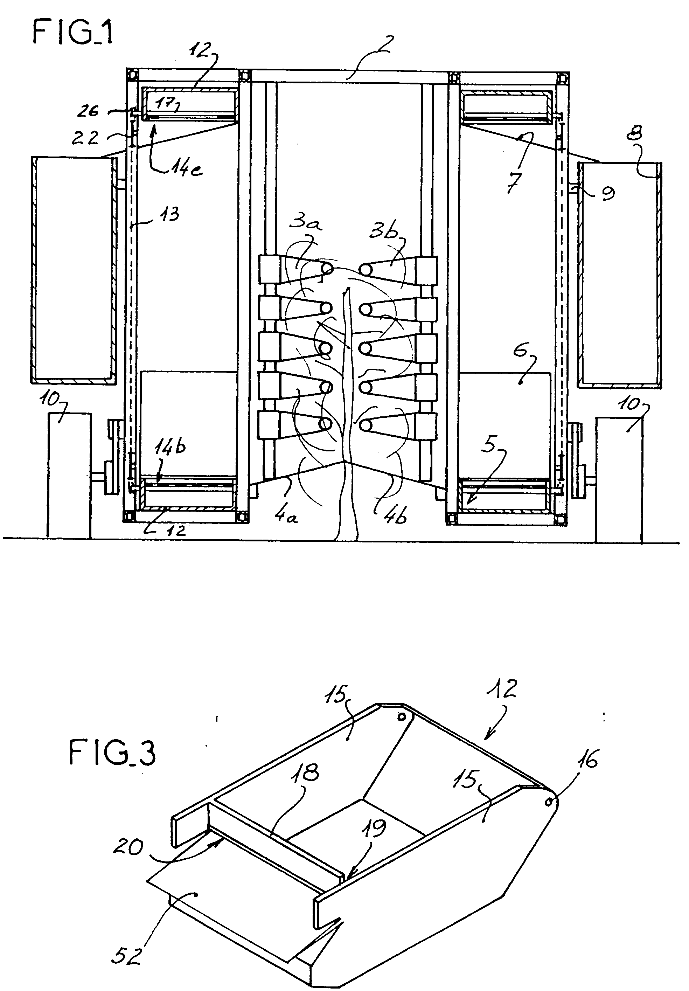

A la figure 1, la référence 2 désigne le châssis en forme de portique d'une machine à vendanger, châssis portant, dans sa partie centrale destinée à enjamber les rangées de ceps, deux séries 3a-3b de fouets aptes à secouer transversalement la végétation pour en faire tomber les grappes et baies sur un plan de réception, composé de deux demi-plans 4a-4b.

Dans la forme d'exécution représentée, la machine comporte de part et d'autre de son plan médian vertical, deux séries de moyens de collecte et de convoyage de la récolte. Chaque série est composée de moyens de collecte et de convoyage 5, de moyens 6 de séparation par aspiration des feuilles et déchets de la récolte, et d'un plan incliné supérieur 7 de déchargement dans un bac de stockage 8.

Dans cette forme d'exécution, le bac 2 est relié au châssis 2 par une articulation transversale 9 lui permettant de pivoter dans le plan vertical sous l'action de moyens moteurs, non représentés, tel qu'un vérin.

De façon connue, le châssis est muni de roues 10 et est associé à des moyens permettant de régler son niveau vertical par rapport au sol.

Le châssis représenté correspond à une machine tractée, mais il est évident que l'invention s'applique également à une machine motorisée.

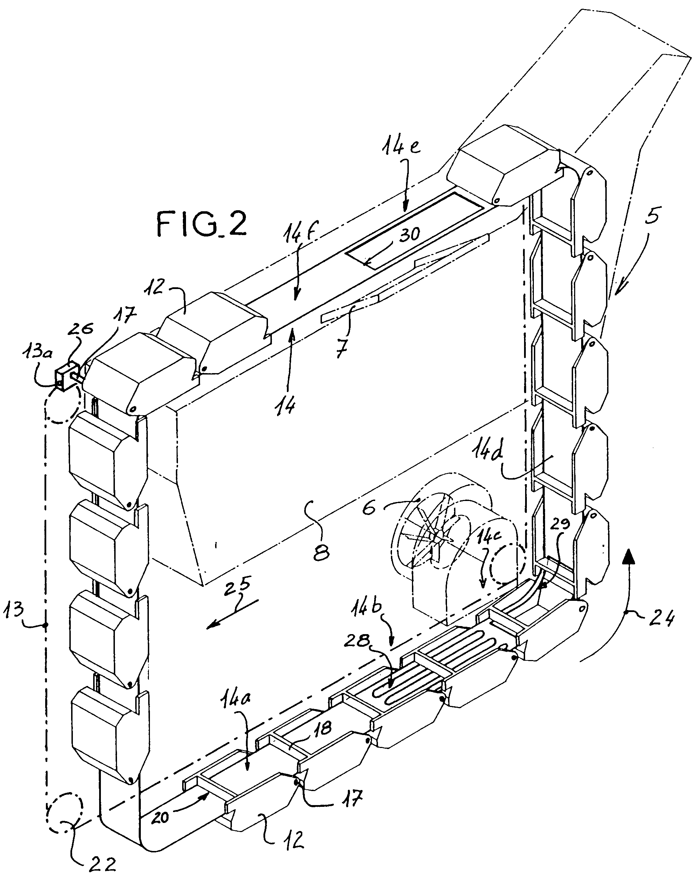

Comme le montre plus en détails la figure 2, les moyens de collecte et de convoyage 5, selon l'invention, sont constitués par des godets 12 liés chacun avec articulation à une chaîne 13, décrivant une trajectoire fermée, et par une paroi de guidage 14, formée de différents tronçons ayant une fonction particulière.

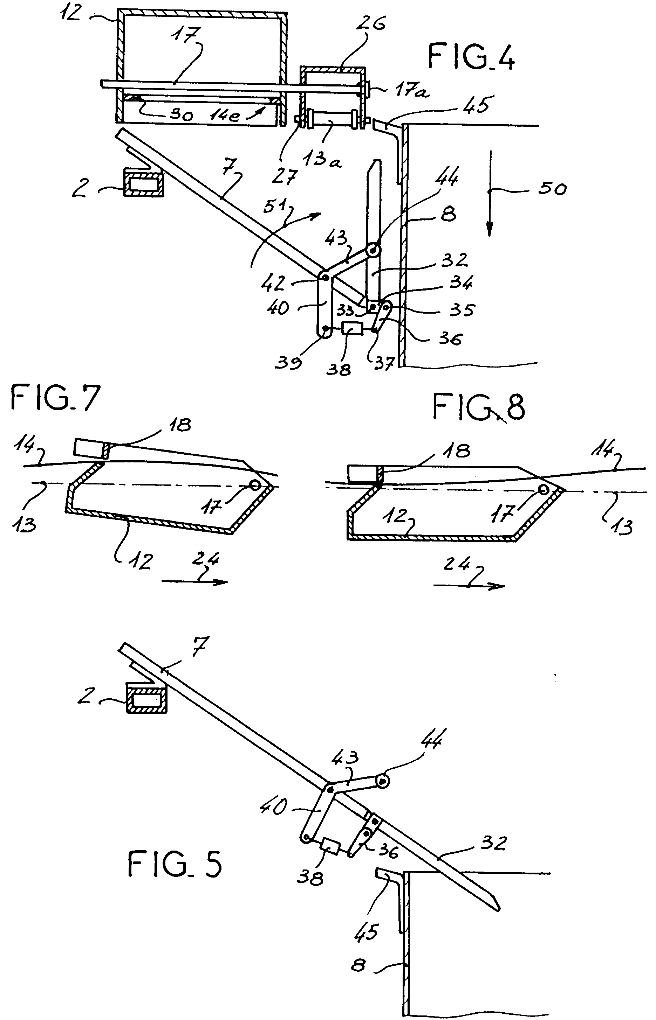

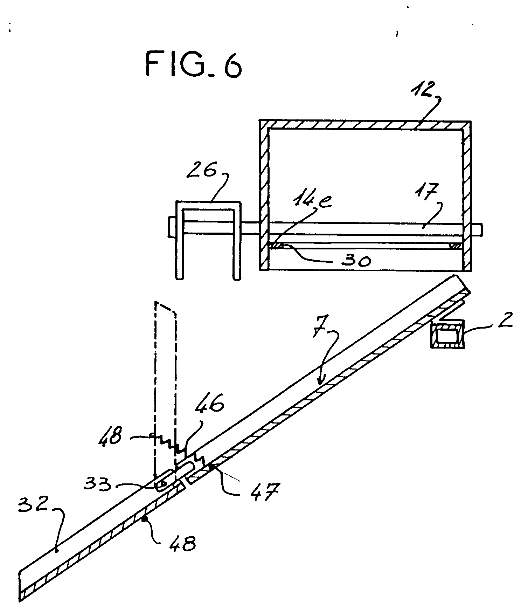

Comme le montre plus en détails la figure 3, chaque godet 12 présente la forme générale d'une boîte ouverte et est muni à l'extrémité aval de ses parois longitudinales 15 d'alésages 16 pour le passage d'un axe d'articulation et d'entraînement 17, visible aux figures 4 à 8.

Dans sa partie amont, chaque godet est muni d'une traverse 18 qui, saillant transversalement de l'une des parois longitudinales 15, est séparée de l'autre paroi par une fente 19 et est séparée de la paroi transversale amont fermant le godet par une ouverture transversale 20.

Comme le montre la figure 2, chaque godet est disposé avec son ouverture tournée vers le centre de la trajectoire fermée de la chaîne 13, chaîne qui, de façon connue, passe sur des poulies de renvoi 22 et sur au moins une poulie motrice, non représentée. Ces différentes poulies sont montées libres en rotation dans des paliers du châssis 2 disposés aux quatre angles d'un rectangle, de manière que la trajectoire de la chaîne soit rectangulaire et comporte deux tronçons sensiblement longitudinaux, respectivement, inférieur et supérieur, et de tronçons sensiblement verticaux, respectivement, avant et arrière. En fonctionnement, la chaîne se déplace dans le sens de la flèche 24 de figure 2, c'est à dire en sens inverse du déplacement de l'appareil, représenté par la flèche 25 à cette même figure.

Comme le montre plus en détails la figure 4, l'axe 17, sur lequel est articulé chaque godet 12, traverse de part en part ce godet et, par son autre extrémité, traverse un cavalier 26 auquel il est lié par sa tête 17a. Ce cavalier est fixé aux deux axes 27 de l'un des maillons 13a de la chaîne 13.

La figure 2 montre que les différents godets 12 sont répartis sur la chaîne 13 les uns derrière les autres en formant un chapelet continu. Le pas de répartition des axes 17 sur la chaîne 17 est égal à la longueur d'un godet, majorée d'un jeu fonctionnel nécessaire au bon pivotement de chaque godet dans les angles de la trajectoire fermée.

Chaque godet est guidé dans son déplacement, à la fois longitudinalement et transversalement, par la paroi 14 qui, traversant la fente 20 de chaque godet, a une largeur égale à l'intervalle entre les deux parois longitudinales 15 de ce godet.

Les figures 7 et 8 montrent que, grâce à ce montage, lorsqu'un godet 12 est déplacé dans le sens de la flèche 24 par son axe 17 lié à la chaîne 13, sa partie postérieure, qui est en amont par rapport à la trajectoire, suit librement le profil de la paroi 14 sans que cela perturbe le fonctionnement de ce moyen de collecte et de convoyage. Il faut aussi noter que, grâce à sa structure, notamment à la traverse 18 fendue en 19 et à sa réalisation en matière synthétique déformable élastiquement, chaque godet peut aisément être désolidariser de la chaîne, pour être changer si besoin est.

Comme cela va être précisé maintenant, la paroi 14 est composée de différents tronçons coopérant avec les godets 12 pour assurer les diverses fonctions de collecte et de convoyage. Dans sa partie inférieure, cette paroi comporte un tronçon 14a, plan et fermé, suivi d'un tronçon 14b comportant des ouvertures oblongues 28, disposées longitudinalement et s'étendant sur une longueur supérieure à la longueur d'un godet. Le tronçon 14c suivant se prolonge dans la courbure de la paroi et comporte une ouverture centrale 29 de longueur supérieure à la longueur d'un godet. Le tronçon 14c est suivi par un tronçon 14d dans lequel la paroi est plane, c'est à dire est totalement fermée. Ce tronçon s'étend jusqu'à un tronçon 14e disposé, en partie supérieure, dans la zone de transfert et de déchargement de la récolte sur le plan incliné 7. A cette fin, le tronçon 14e est traversé par une ouverture longitudinale 30 de longueur supérieure à la longueur d'un godet. Le tronçon 14e est raccordé au tronçon 14a par un tronçon intermédiaire 14f, formé par une paroi, plane et fermée, assurant uniquement la fonction de guidage des godets 12.

Dans une variante de réalisation, non représentée, le tronçon 14f peut être remplacé par un rail de guidage extérieur, s'étendant sur sa longueur ou sur toute la trajectoire de la chaîne

Avec le dispositif selon l'invention, la récolte tombant sur chaque demi-plan de réception 4a ou 4b est dirigée par ce demi-plan vers le tronçon 14a des moyens de collecte et de convoyage correspondant. Elle tombe ainsi d'une faible hauteur, correspondant sensiblement à celle de la hauteur d'une traverse 18 de chaque godet, sur la paroi plane 14a qui la réceptionne en assurant son étalement. Sous la poussée des traverses 18 des godets, la récolte est déplacée dans le sens de la flèche 24 en direction du tronçon 14b, correspondant à la zone de séparation des feuilles et déchets.

Ici, les baies séparées des grappes passent à travers les lumières oblongues 28 et tombent dans les godets sous-jacents, tandis que les grappes restent sur la paroi jusqu'à ce que les traverses 18 les poussant les fassent tomber à travers l'ouverture 29 dans le godet.

Grâce à cet agencement, les baies et grappes ne sont pas blessées ou éclatées et sont donc peu imprégnées de jus de raisin, ce qui favorise l'évacuation des feuilles par les moyens d'aspiration 6 et permet, à efficacité égale, de réduire la puissance d'aspiration de ces moyens en réduisant ainsi les risques d'aspiration du jus de raisin par ces moyens. Il en résulte que la récolte qui tombe dans le godet est propre, peu souillée par le jus de raisin et est composée de baies ou de grappes non éclatées et non choquées, ce qui améliore les conditions ultérieures de vinification.

A partir du tronçon 14c, chaque godet 12 obturé par le tronçon de paroi 14b, déplace verticalement la récolte qu'il contient, et qui, excepté le frottement contre la paroi 14d, n'est soumise à aucun autre mouvement pouvant l'endommager. Lorsqu'un godet arrive au voisinage du tronçon 14e, l'ouverture 30 ménagée dans ce tronçon permet à son contenu de tomber par gravité sur le plan incliné 7, qui est avantageusement disposé à proximité immédiate de l'ouverture 30 pour limiter la chute de la récolte et éviter son endommagement. De là, la récolte est amenée vers le bac de stockage 8.

Au-delà du tronçon 14e, chaque godet vide est guidé par le tronçon 14f jusqu'au poste de collecte où il recommence un cycle de chargement.

Dans une forme d'exécution particulière, et comme montré aux figures 4, 5 et 6, le plan incliné 7 disposé au poste de transfert et de déchargement des godets, est prolongé par un volet 32 articulé à son extrémité inférieure autour d'un axe longitudinal 33. Ce volet est solidaire d'une patte coudée 34 à l'extrémité libre de laquelle est articulée, en 35, l'une des extrémités d'un levier 36, articulé par son autre extrémité, et en 37, sur une biellette 38. Cette biellette est articulée en 39 à l'extrémité inférieure d'un levier coudé 40, lui-même articulé près de son coude, et en 42, sur le bord du plan incliné 7. L'autre branche 43 du levier coudé est munie à son extrémité libre d'un galet 44 qui est disposé dans la trajectoire verticale d'une butée 45, saillant latéralement du bac de stockage 8.

Enfin, comme le montre plus en détails la figure 6, le volet 32 est relié au plan incliné 7 par des moyens de verrouillage élastique constitués par un ressort de traction 46, dont l'une des extrémités est accrochée en 47 sur le plan incliné et dont l'autre extrémité est accrochée en 48 sur le volet 32. La figure 6 montre que l'articulation 38 est au-dessous de l'axe d'articulation 33 du volet 32 sur le plan incliné 7, lorsque ce volet est dans le prolongement de ce plan incliné. En raison de cette disposition, le même ressort 46 assure le verrouillage élastique du volet lorsqu'il est dans sa position d'utilisation, dans le prolongement du plan 7, ou lorsqu'il est dans sa position d'arrêt de la récolte, quand il est disposé transversalement à ce volet, comme représenté en traits mixtes à la figure 6.

Lorsque le bac de stockage 8, après avoir été vidé, est ramené dans sa position de réception de la vendange, par déplacement dans le sens de la flèche 50 de figure 4, sa butée 45 rencontre le galet 44 et tend à faire pivoter le levier 42 dans le sens de la flèche 51, ce qui a pour effet d'entraîner, par la biellette 38 et le levier 37, le basculement dans le même sens du volet 32. En fin de mouvement, ce volet vient dans la position représentée à la figure 5, c'est à dire pénètre à l'intérieur du bac 8. Lorsque le bac est déplacé en sens inverse, sa butée revient prendre appui sous le galet 44 pour provoquer, par le levier 40, la bielle 38 et le levier 47, le redressement du volet 32 en position verticale d'arrêt, afin de retenir la récolte déversée par les godets jusqu'à l'arrêt de la chaîne les entraînant. Ce volet évite donc toute perte de récolte.

Sur ce point, il faut aussi noter que, pour éviter toute perte de récolte par passage de celle-ci dans l'intervalle entre deux godets 12, lors du passage de cet intervalle au niveau du tronçon 14c comportant l'ouverture 29, chaque godet est muni dans sa partie amont d'un voile transversal 52 sensiblement parallèle à son fond. Ce voile s'étend au-delà de la paroi transversale amont du godet pour constituer une cloison d'occultation dans l'intervalle entre ce bord amont et le bord aval du godet suivant.

De ce fait, les baies ou grappes qui, poussées par la traverse 18 du godet suivant, auraient tendance à ne pas tomber dans le godet en cours de chargement, ou dans le suivant, sont réceptionnées par le voile 52 qui, lors du redressement du godet pour emprunter le tronçon 14d, les laisse tomber par gravité dans le godet suivant, alors directement disposé au-dessous.

Il est évident que le dispositif de collecte et de convoyage qui a été décrit ci-dessus dans le cas de son application à une machine à vendanger, peut être disposé sur toute autre machine assurant la récolte de baies ou fruits fragiles et ne supportant ni les chocs ni l'écrasement.

**Revendications**

1. Dispositif de collecte et de convoyage des baies et fruits dans une machine de récolte, du type composée d'un châssis-portique (2) comportant, sur au moins l'un de ses côtés internes, un plan inférieur (4a) de réception de la récolte, des moyens (5) de collecte de la récolte, des moyens d'aspiration (6) pour séparer au moins les feuilles du reste de la récolte, et des moyens de convoyage de la récolte jusqu'à une zone de transfert en direction d'un bac de stockage (8), et dans lequel, les moyens de collecte et de convoyage sont constitués par des godets (12) coopérant avec des moyens de guidage et dont les ouvertures sont tournées vers le centre de la trajectoire fermée de la chaîne (13) à laquelle ils sont liés, par des articulations transversales en formant un chapelet continu, décrivant une trajectoire comprenant une branche inférieure pour la collecte et la séparation, une branche supérieure pour le transfert au bac et au moins une branche intermédiaire assurant le convoyage de la récolte, **caractérisé en ce que** chacun des godets est muni d'une fente transversale (20) qui, séparant sa paroi amont d'une traverse (18), est traversée par une paroi continue de guidage (14) composée par des tronçons de paroi (14a-14f), sensiblement parallèles à la trajectoire des articulations (17) des godets (12), disposés à l'intérieur de cette trajectoire, s'insérant transversalement entre les parois longitudinales ( 15) de chaque godet et comportant, d'amont en aval :

   – dans la zone inférieure de collecte, un tronçon plan et fermé (14a),

   – dans la zone de séparation par aspiration, un tronçon (14b) traversé par des lumières longitudinales oblongues (28),

   – dans la zone suivante de remplissage des godets par leur propre traverse ( 18), un tronçon de paroi ( 14c) traversé par une ouverture longitudinale (29), de longueur au moins égale à la longueur d'un godet (12),

   – dans la zone intermédiaire de convoyage, un tronçon de paroi (14d) obturant les ouvertures des godets (12),

   – dans la zone supérieure du transfert, un tronçon de paroi (14e) traversé par une ouverture longitudinale (30) débouchant immédiatement au-dessus d'un plan incliné,

   – et enfin un tronçon de raccordement (14f) s'étendant de la zone de transfert à la zone de collecte.

2.  Dispositif selon la revendication 1, **caractérisé en ce que** la liaison articulée de l'extrémité aval de chaque godet (12) avec la chaîne (13) est assurée par un axe transversal (17) dont l'extrémité libre traverse librement et de part en part les extrémités des parois longitudinales (15) du godet (12) et dont la tête (17a) est fixée à un cavalier (26), solidaire d'un maillon (13a) de la chaîne (13) correspondante

3.  Dispositif selon l'une quelconque des revendications 1 et 2, **caractérisé en ce que** le plan incliné (7), disposé dans la zone de transfert, est muni, à son extrémité aval, d'un volet articulé (32), apte à occuper une position de transfert, dans le prolongement du plan incliné, et une position d'arrêt, dans laquelle il est sensiblement vertical à l'extrémité de ce plan, et est associé, d'une part, à des moyens (46) de verrouillage élastique dans chacune de ces deux positions, et, d'autre part, par une timonerie (34 à 39), à un levier de commande (40) dont l'extrémité est dans la trajectoire d'un poussoir (45) saillant latéralement du bac de stockage correspondant.

4.  Dispositif selon la revendication 3, **caractérisé**

**en ce que** les moyens de verrouillage élastique sont constitués par un ressort de traction (46) dont l'une des extrémités est fixée sur le plan incliné (7) et dont l'autre extrémité est fixée sur le volet (32), au-dessous de l'axe (33) d'articulation de ce volet sur l'extrémité du plan incliné (7).

5.  Dispositif selon l'une quelconque des revendications 3 et 4, **caractérisé en ce** que le levier de commande (40) est articulé, sur le bord du plan incliné (7) et est attelé, par son extrémité inférieure, à une bielle (38), tandis que le volet articulé (32) est muni d'une patte (34) sur laquelle est articulée l'une des extrémités d'un levier (36), dont l'autre extrémité est articulée sur la bielle (38) précitée.

6.  Dispositif selon l'une quelconque des revendications 1 à 5, **caractérisé en ce que** chaque godet (12) est réalisé en matière synthétique déformable élastiquement et est muni d'une traverse (18) qui est séparée par une fente (19) de l'une de ses parois longitudinales (15).

FIG_1

FIG_3

FIG.2

FIG. 4

FIG. 7

FIG. 8

FIG. 5

FIG. 6

**Office européen des brevets**

# RAPPORT DE RECHERCHE EUROPEENNE

Numero de la demande

EP    92 42 0115

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| D,A | FR-A-2 555 401 (PONZO)<br>* page 1, ligne 21 - page 2, ligne 9 *<br>* page 8, ligne 5 - page 9, ligne 10; figures 2-6 * | 1 | A01D46/28 |
| | --- | | |
| A | FR-A-2 298 266 (PROU)<br>* page 2, ligne 7 - page 4, ligne 3; figures 1,2 * | 1 | |
| | --- | | |
| A | FR-A-2 225 082 (PROU)<br>* page 4, ligne 23 - page 6, ligne 38; figures 1,2,7 * | 1 | |
| | --- | | |
| D,A | US-A-4 944 387 (BURKE)<br>* colonne 3, ligne 38 - colonne 6, ligne 50; figures 1-9 * | 1 | |
| | ----- | | |

**DOMAINES TECHNIQUES RECHERCHES (Int. Cl.5 )**

A01D

Le présent rapport a été établi pour toutes les revendications

| Lieu de la recherche | Date d'achèvement de la recherche | Examinateur |
|---|---|---|
| LA HAYE | 30 JUIN 1992 | HERYGERS J.J. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)